# EUROPEAN PATENT APPLICATION

(11) **EP 1 780 446 A1**
(43) Date of publication of application: **02.05.2007**
(21) Application number: 05767293.3
(22) Date of filing: 27.07.2005
(51) Int. Cl.: F16H 55/22, F16H 57/04, B62D 5/04, F16H 1/16, F16H 55/06, B23F 11/00, B23H 9/00

(54) **SPEED-REDUCTION GEAR**

(30) Priority: 27.07.2004 JP 2004218345
(71) Applicant: NSK LTD., Shinagawa-ku, Tokyo 141-8560 (JP)
(72) Inventor: IWANO, Toshiyuki C/O NSK STEERING SYSTEMS Co.,Ltd, Gunma 371-8528 (JP)
(74) Representative: Schuster, Thomas
(86) International application number: PCT/JP2005/013771
(87) International publication number: WO 2006/011534

(57) **Abstract**

A reduction gear in which an engaging surface of gear teeth is processed so that grease for lubricating the engaging surface is sufficiently supplied over the entire of the engaging surface, thereby reducing the friction caused on the engaging surface, and increasing the durability of the gear teeth is provided.

In a reduction gear which includes a worm made of metal and a worm wheel having gear teeth which engage with the worm, wherein at least the gear teeth of the worm wheel are made of synthetic resin, and in which an engaging surface of the gear teeth is lubricated by grease, the engaging surface has over an entire surface a plurality of grease reservoir grooves formed along a sliding line of the engaging surface.

## Description

### Technical Field

The present invention relates to a reduction gear which is to be used in an electric power steering, or the like, and more particularly to improvements in durability of a reduction gear.

### Background Art

Conventionally, in a reduction mechanism for an electric power steering apparatus or the like, a reduction gear consisting of a worm and a worm wheel having gear teeth which engage with the worm is used, because of such advantages that rotation force of an electric motor of high-speed revolution and low torque can be transmitted to a steering shaft with a high reduction ratio.

In such a reduction gear, large sliding occurs in an engaging surface (sliding contact face) between the worm and the gear teeth, and therefore the surface is filled with a lubricant (grease) having a high adhesion property, thereby reducing the friction of the engaging surface, and preventing abrasions of tooth surfaces, or the decrease in strength due to seizing, and the increase of backlash (rattling) from occurring.

In recent years, in a reduction mechanism for an electric power steering apparatus, high efficiency and high output of transfer torque are requested. Therefore, a surface pressure applied on the engaging surface between the worm and the gear teeth is increased. In a conventional reduction gear, however, the engaging surface is formed as a mirror surface, so that a state in which the engaging surface runs short of a grease film often occurs in the torque transfer under a high surface pressure. In such a state, an increase of self-heating caused by the engagement of the worm and the gear teeth degrades the strength of synthetic resin. As a result, there arises a problem in that the lifetime of the engaging surface is shortened. Such a problem exists not only in the reduction mechanism for the electric power steering apparatus, but also in a general reduction gear consisting of a worm and a worm wheel.

In order to solve such a problem, for example, Patent References 1 and 2 disclose a reduction gear in which a recess (groove) is disposed in a tooth surface of a worm and/or a worm wheel, and a lubricant is held in the recess.

In a reduction gear (worm reduction apparatus) disclosed in Patent Reference 1, mutually sliding contact surfaces of the worm and the worm wheel are processed by using a fluid which can solve a material used in the sliding contact surfaces, thereby forming oil reservoir portions on the sliding contact surfaces. Thus, grease is held in the oil reservoir portions. In addition, Patent Reference 1 discloses also a reduction gear in which oil reservoir portions are formed by a laser process or an electric discharge process, other than the processing method by the chemical reaction using the fluid.

In a reduction gear (reduction gearwheel) disclosed in Patent Reference 2, on both sides of teeth of the worm and/or the worm wheel, long grooves are disposed in a direction of a tooth trace on a tooth surface between a center portion in the vicinity of a pitch circle and a tooth bottom and/or a tooth surface between the center portion and a tooth top, thereby supplying a lubricant such as grease held in the grooves to the center portion which is short of the lubricant because of a centrifugal force of the rotation.

Patent Reference 1: Japanese Patent Unexamined Publication JP-A-8-226526
Patent Reference 2: Japanese Patent Unexamined Publication JP-A-2003-207031

### SUMMARY OF THE INVENTION

### Problems that the Invention is to Solve

However, the reduction gears disclosed in Patent References 1 and 2 are insufficient for preventing the short of a grease film in the engaging surface of the gear teeth, and for maintaining good lubricity.

In the reduction gear of Patent Reference 1, the means for holding the grease between the both gear teeth of the worm and the worm wheel is configured by the plural oil reservoir portions aligned on the surface of the teeth of the worm wheel. In the case where some of the oil reservoir portions run short of the grease during the running for a long time period, therefore, it is structurally impossible to refill the grease by drawing grease from the other oil reservoir portions. Accordingly, it is necessary to regularly perform maintenance of the filling condition of the grease in the engaging surface. Therefore, a problem arises when continuous running for a long time is to be performed.

In the processing method for forming the oil reservoir portions in Patent Reference 1, an extensive apparatus is required, and the processing work is complicated, so that the production cost and the effort are required. In addition, in the processing method which utilizes the chemical reaction, there is a problem in that the chemical reaction changes the property of the material of the engaging surface.

In the reduction gear of Patent Reference 2, on the both sides of the tooth of the worm and/or the work wheel, the long grooves are disposed in the direction of the tooth trace on the tooth surface between the center portion in the vicinity of the pitch circle and the tooth bottom, and on the tooth surface between the center portion and the tooth top. However, the two grooves are not sufficient for holding the grease filled in the engaging surface. Moreover, the portions for holding the grease are limited to the two grooves, so that the grease is unevenly distributed. For example, there is a problem in that, in the tooth bottom, the tooth top, or the center portion which is distant from the groove, the short of grease disadvantageously occurs.

The invention has been conducted in view of the above-described circumstances. It is an object of the invention to provide a reduction gear in which the engaging surface of gear teeth is processed so that grease for lubricating the engaging surface is sufficiently supplied over the entire of the engaging surface, thereby reducing the friction caused on the engaging surface, and increasing the durability of the gear teeth.

### Means for Solving the Problems

The object of the invention is attained by a reduction gear including: a worm made of metal; and a worm wheel having gear teeth which engage with the worm, at least the gear teeth of the worm wheel are made of synthetic resin, and an engaging surface of the gear teeth is lubricated by grease, wherein the engaging surface has a plurality of grease reservoir grooves formed along a sliding line of the engaging surface over an entire surface.

The object is effectively attained by forming the grease reservoir grooves on the engaging surface by a processing method in which a processing worm having a tooth surface to which diamond abrasive grains or CBN abrasive grains are electrodeposited is rotated while engaging with the gear teeth, thereby grinding the engaging surface.

The object is attained by a reduction gear including: a worm made of metal; and a worm wheel having gear teeth which engage with the worm, at least the gear teeth of the worm wheel are made of synthetic resin, and an engaging surface of the gear teeth is lubricated by grease, wherein an arithmetic average roughness Ra of a surface of the worm is 0.1 µm or less, and the engaging surface of the worm wheel has a plurality of grease reservoir recess portions which are formed in a scattered manner over an entire surface.

The object is effectively attained by forming the grease reservoir recess portions on the engaging surface by a processing method in which the engaging surface is exposed to plasma discharges, thereby forming recesses, and thereafter the engaging surface is pre-operated by the worm.

The object is effectively attained by forming the grease reservoir recess portions on the engaging surface by a processing method in which recesses are formed on the engaging surface by a blasting process, and thereafter the engaging surface is pre-operated by the worm.

In addition, the object is effectively attained by such a configuration in which the worm and the worm wheel constitute a reduction mechanism for an electric power steering apparatus.

### Advantages of the Invention

As described above, according to the reduction gear of the invention, the engaging surface of the gear teeth of the worm wheel has a plurality of grease reservoir grooves formed along the sliding line of the engaging surface over the entire surface of the engaging surface. Therefore, the grease can be sufficiently held even under a high surface pressure, and the lubricity over the entire surface of the engaging surface can be maintained to good conditions. In addition, when the surface pressure applied on the engaging surface is reduced, a certain one of a grease reservoir groove which is in a short condition of grease can draw in grease from another grease reservoir groove formed in the vicinity of the one grease reservoir groove. Thus, a local short of a grease film can be prevented from occurring. As a result, the abrasion of the engaging surface can be reduced, and the fatigue life can be prolonged.

Also when the engaging surface has a plurality of grease reservoir recess portions formed in a scattered manner over the entire surface, the lubricity on the entire surface of the engaging surface can be maintained to good conditions, and the fatigue life can be prolonged.

In the invention, as the processing means for forming the grease reservoir grooves, a processing worm in which diamond abrasive grains or CBN abrasive grains are electrodeposited on the tooth surface is employed, or as the processing means for forming the grease reservoir recess portions, plasma discharge or blasting process is employed, so that the engaging surface can be easily processed. Accordingly, a reduction gear which can perform torque transfer with high efficiency and high output can be produced at a low cost and low effort.

In addition, when the reduction gear is used in a reduction mechanism for an electric power steering apparatus, the reliability of the strength is enhanced, and the lifetime of the apparatus can be prolonged. Accordingly, it is possible to reduce the possibility of failure of the reduction mechanism, and hence the effort and cost required for the repair of the apparatus can be reduced.

### BRIEF DESCRIPTION OF THE DRAWINGS

Fig. 1 is a perspective view of a reduction gear of an embodiment of the invention.
Fig. 2 is a perspective view of main portions of a gear tooth of the reduction gear in Embodiment 1 of the invention.
Fig. 3 is a section view of main portions of an engaging surface of the gear tooth, in which (a) shows a state where any surface pressure is not applied on the engaging surface, and (b) shows a state where a surface pressure is applied on the engaging surface.
Fig. 4 is a section view of a reduction mechanism for an electric power steering apparatus in which the reduction gear is used.
Fig. 5 is a perspective view of main portions of a gear tooth of a reduction gear in Embodiment 2 of the invention.

### Description of Reference Numerals and Signs

- 1: reduction gear
- 2: worm
- 3: gear tooth
- 4: worm wheel
- 7: engaging surface
- 8: grease reservoir groove
- 10: reduction mechanism
- 14: grease reservoir recess portion

### Best Mode for Carrying Out the Invention

Hereinafter, embodiments of the invention will be described with reference to the drawings.

### Embodiment 1

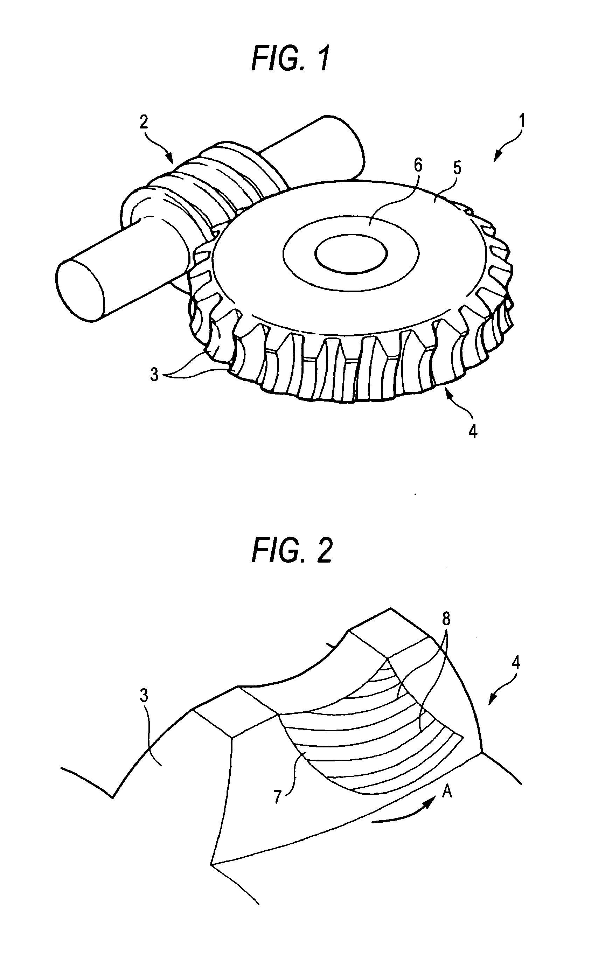

Fig. 1 is a perspective view of a reduction gear of an embodiment of the invention. In the figure, the reduction gear 1 is configured by metal worm 2, and a worm wheel 4 having gear teeth 3 which engage with the worm 2.

The worm wheel 4 is formed by integrating a resin portion 5 having gear teeth 3 formed on an outer circumferential face, with a core metal 6 made of metal. The resin portion 5 is formed by synthetic resin containing reinforcing fibers. As such synthetic resin, for example, it is preferable to use a resin in which a nylon (polyamide) resin such as nylon 6, nylon 66, or nylon 46, a polyacetal resin, or a phenol resin is used as a base material, and the mechanical property is reinforced by reinforcing fibers such as glass fibers, carbon fibers, potassium titanate whiskers, or aluminum borate whiskers. When synthetic resin which does not contain reinforcing fibers is used, it is desired that a monomer casting nylon or the like independently having durability at a certain level or more is used.

Preferably, the arithmetic surface roughness Ra of the metal worm 2 is 0.1 µm or less so that the metal worm 2 can advantageously work on the abrasion with the worm wheel 4 as a counter material, and sufficiently function as a reduction gear.

In the embodiment, the resin portion 5 extending from the outer circumferential face of the core metal 6 to the tooth end of the gear teeth 3 is formed by the synthetic resin. The invention is not limited to this, but the whole of the worm wheel 4 may be formed, for example, by synthetic resin. Alternatively, only an outer circumference portion of the worm wheel 4 on which the gear teeth 3 are formed may be formed by synthetic resin.

In the reduction gear 1 generally having the above-described configuration, a portion between the worm 2 and the worm wheel 4, at least a butting portion of teeth of the worm 2 and the gear teeth 3 of the worm wheel 4 is filled with grease for lubrication. As the grease, in order to advantageously function on the wettability for the synthetic resin of the gear teeth 3, preferably, mineral oil, synthetic hydrocarbon oil (including poly α-olefin oil), ester-based synthetic oil, phenyl ether-based synthetic oil, or the like is used as a base oil, and a thickener and an ester-based compound are mixed with the base oil. As the thickener, a urea compound, or a soap-based compound (including a metal soap-based compound, and a composite-type compound) is desirably used. As the ester-based compound as an additive, ester-based wax, or a small amount of ester-based synthetic oil (including diester oil, polyol ester oil, and aromatic ester oil) is desirably used.

Fig. 2 is a perspective view of main portions of a gear tooth in Embodiment 1 of the invention. In the figure, an engaging surface 7 which is in sliding contact with the worm 2 is formed on the tooth surface of the gear tooth 3. On the engaging surface 7, a plurality of grease reservoir grooves 8 are formed over the entire surface, along the sliding line (the direction of the arrow A in Fig. 2). The grease reservoir grooves 8 are used for holding the filled grease on the engaging surface 7. In Fig. 2, only several numbers of grease reservoir grooves 8 are shown, but innumerable grooves 8 are actually formed over the entire surface of the engaging surface 7.

The grease reservoir grooves 8 are formed by processing means after the gear teeth 3 are formed by cutting or grinding. As the processing means, for example, a method in which the engaging surface 7 is ground by a processing worm to which diamond abrasive grains are electrodeposited may be employed. The processing worm is formed by electrodepositing natural diamond abrasive grains having particle size of about 600 to a worm having the same shape as that of the worm 2 used in the reduction gear 1, by utilizing such a characteristic that, when diamond abrasive grains are agitated in a nickel plate bath, a coating is formed while accommodating the diamond abrasive grains in electrolytic plating. In the processing method, the processing worm to which the diamond abrasive grains are electrodeposited is rotated while the processing worm engages with the engaging surface 7 of the gear teeth, so that the engaging surface 7 is ground. Thereafter, the engaging surface 7 is pre-operated by the worm 2 used in the reduction gear 1, thereby forming the innumerable grease reservoir grooves 8.

In the embodiment, natural diamond is used as the abrasive grains to be electrodeposited, but the invention is not limited to this. For example, a synthetic diamond, a metal-coated synthetic diamond, or the like may be used. Alternatively, as the abrasive grains to be electrodeposited, CBN abrasive grains of cubic boron nitride, metal-coated cubic boron nitride, or the like may be used.

Also when the above-described processing means is performed by, as another processing worm, using a worm in which the tooth surface is roughened with strong acid and quenched, or a worm in which the tooth surface is roughened by a nitriding treatment, the same functions and effects as those of the processing method using the above-described processing worm in which the diamond abrasive grains are electrodeposited can be attained.

Moreover, as other processing means, after the engaging surface 7 is formed, processing means in which the engaging surface 7 is cut along a sliding line (the direction of the arrow A in Fig. 2) by a hob having spade-like teeth, or that in which the engaging surface 7 is scrubbed by a brush along the sliding line may be applied. Also in this case, the same functions and effects as those of the above-described processing method can be attained.

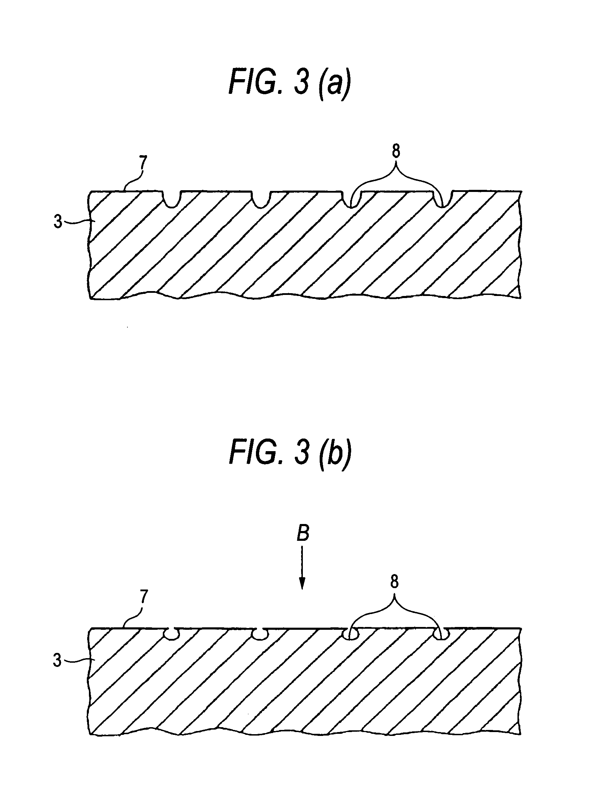

Fig. 3 is a section view of main portions of the engaging surface 7 obtained by vertically cutting the engaging surface with respect to the grease reservoir grooves 8. In Fig. 3, (a) shows a state where any surface pressure is not applied on the engaging surface 7, and (b) shows a state where a surface pressure is applied on the engaging surface 7.

The gear tooth 3 made of synthetic resin is elastically deformed when a surface pressure is applied in the direction of the arrow B in Fig. 3(b) by the engaging contact with the worm 2. Accordingly, the engaging surface 7 is crushed, and mouths of the grease reservoir grooves 8 are reduced in size. As a result, the grease reservoir grooves 8 having smaller mouths suck the grease into the grooves due to the capillary effect, so that the grease can be sufficiently held even under a high surface pressure.

In addition, the grease reservoir grooves 8 are formed over the entire surface of the engaging surface 7 along the sliding lines (in the direction of the arrow A in Fig. 2). In the case where some of grease reservoir grooves 8 are short of grease, therefore, grease can be supplied from other grease reservoir grooves 8 formed in the vicinity, when the surface pressure applied on the engaging surface 7 is lowered.

As described above, in the reduction gear according to Embodiment 1, the innumerable grease reservoir grooves 8 are formed along the sliding line of the engaging surface 7 over the entire surface of the engaging surface 7 of the gear teeth 3 of the worm wheel 4. Accordingly, the grease with which the engaging surface 7 is filled is held by the grease reservoir grooves 8, and the lubricity on the entire surface of the engaging surface 7 can be maintained to good conditions. As a result, the sliding friction coefficient between the worm 2 and the worm wheel 4 can be reduced, and the durability of the reduction gear can be increased.

As the means for processing the engaging surface 7, a worm to which diamond abrasive grains or CBN abrasive grains are electrodeposited, that in which the tooth surface is roughened by strong acid and quenched, that worm in which the tooth surface is roughened by a nitriding treatment, a hob having spade-like teeth, or a brush is used, whereby the innumerable grease reservoir groves 8 can be easily formed on the engaging surface 7.

Hereinafter, as an example in which the thus configured reduction gear is applied to an apparatus, a reduction mechanism for an electric power steering apparatus will be described below. However, the reduction gear according to the invention is not limited to such application, but can be used in reduction mechanisms for various apparatuses. The components which are identical with those of the above-described reduction gear are indicated by the same reference numerals, and their description is omitted.

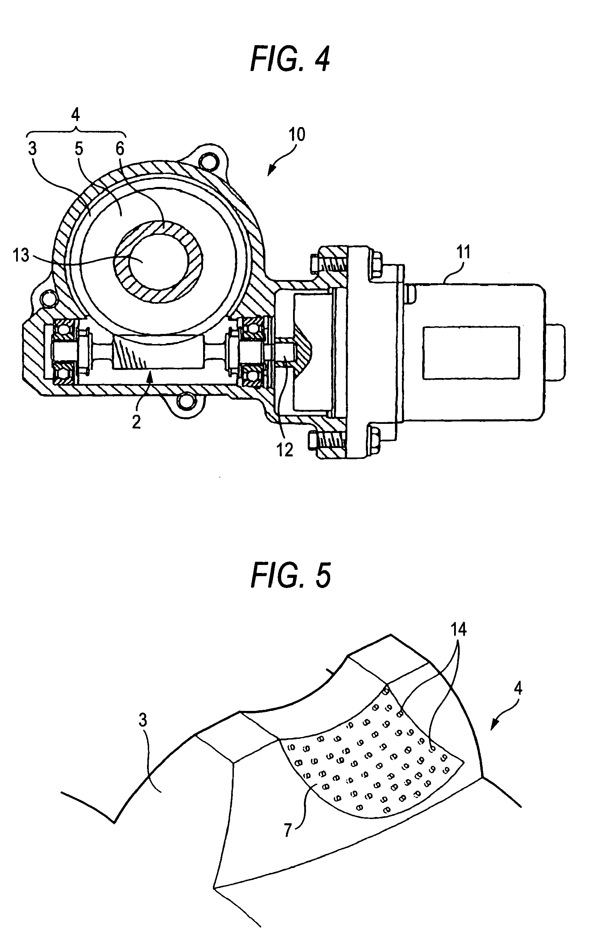

Fig. 4 is a section view of a reduction mechanism for an electric power steering apparatus to which the reduction gear is applied. In the figure, the reduction mechanism 10 reduces the rotation of an electric motor 11 for steering assistance via the worm 2 coupled to a rotation shaft 12 of the electric motor 11 and the worm wheel 4 which engage with the worm 2, and transfers the rotation to a steering shaft 13 which is pressed into and fixed to the core metal 6 of the worm wheel 4.

In the reduction mechanism 10, the lubricity in the engaging surface 7 of the gear teeth 3 can be satisfactorily maintained. Thus, the self-heating in the engagement between the worm 2 and the gear teeth 3 can be suppressed, and the lifetime of the apparatus can be prolonged. Therefore, the possibility of failure of the reduction mechanism 10 can be reduced, so that the effort and cost required for the repair of the apparatus can be reduced.

### Embodiment 2

Fig. 5 is a perspective view of main portions of a gear tooth in Embodiment 2 of the invention. The components which are identical with those of Embodiment 1 are indicated by the same reference numerals, and their description is,omitted.

On the tooth surface of the gear tooth 3 in Embodiment 2, the engaging surface 7 for engaging with the worm 2 is formed. On the engaging surface 7, the plurality of grease reservoir recess portions 14 are formed. The grease reservoir recess portions 14 are formed for holding filled grease. Fig. 5 shows only several numbers of grease reservoir recess portions 14, but innumerable recess portions 14 are actually formed in a scattered manner over the entire surface of the engaging surface 7.

The grease reservoir grooves 8 are formed by processing means after the gear teeth 3 are formed by cutting or grinding. As the processing means, for example, there is a processing method in which the engaging surface 7 is exposed to innumerable plasma discharges, so that innumerable recesses and projections are formed on the surface, and thereafter the engaging surface 7 is pre-operated by the worm 2, thereby forming the innumerable grease reservoir recess portions 14.

As other processing means, a blasting process which is used for increasing the fatigue lifetime of the surface of a workpiece, or for removing scales, rust, coating, and the like on the surface of the workpiece to clean the surface may be used. The blasting process includes: shot peening for improving the fatigue lifetime by throwing a number of small steel particles which are called shots, to the surface of the workpiece to allow compression stress to remain; shot blast by throwing shots or small particles which have edges, and which are called grits, thereby grinding and cleaning the surface of the workpiece; or sand blast in which sands (generally, alumina system) are sprayed to the surface of the workpiece by using a sandblasting machine, in order to remove sands and scales attached to the surface of a cast metal, a steel product, or the like. In such processing means, the polishing material used in the above-described blasting process is thrown to the engaging surface 7, so that innumerable recesses and projections are formed on the surface. Thereafter the engaging surface 7 is pre-operated by the worm 2, thereby forming the innumerable grease reservoir recess portions 14.

As described above, in the reduction gear according to Embodiment 2, the innumerable grease reservoir recess portions 14 are formed in a scattered manner over the entire surface of the engaging surface 7 of the gear teeth 3 of the worm wheel 4. Therefore, the grease with which the engaging surface 7 is filled can be held by the grease reservoir recess portions 14, and the lubricity of the entire surface of the engaging surface 7 can be maintained to be good. Accordingly, the same functions and effects as those of Embodiment 1 can be attained.

When plasma discharge or the blasting process is used the means for processing the engaging surface 7, the innumerable grease reservoir recess portions 14 can be easily formed on the engaging surface 7.

The reduction gear according to Embodiment 2 can be used in a reduction mechanism for various apparatuses such as a reduction mechanism for an electric power steering apparatus, in the same manner as Embodiment 1 described above.

Although The invention has been described in detail with reference to specific embodiments, it is obvious to those skilled in the art that various modifications and changes may be made without departing from the scope and spirit of the invention.
This application is based on Japanese patent application (No. 2004-218345) filed July 27, 2004, and the contents of the patent application are incorporated herein by reference.

### Industrial Applicability

The invention can provide a reduction gear in which an engaging surface of gear teeth is processed so that grease for lubricating the engaging surface is sufficiently supplied over the entire of the engaging surface, thereby reducing the friction caused on the engaging surface, and improving the durability of the gear teeth.

## Claims

1. A reduction gear comprising:
a worm made of metal; and
a worm wheel comprising gear teeth which engage with the worm,
wherein at least the gear teeth of the worm wheel are made of synthetic resin,
an engaging surface of the gear teeth is lubricated by grease, and
the engaging surface has a plurality of grease reservoir grooves, which are formed along a sliding line of the engaging surface, over an entire surface.

2. The reduction gear according to claim 1, wherein the grease reservoir grooves are formed on the engaging surface by a processing method in which a processing worm having a tooth surface to which diamond abrasive grains or CBN abrasive grains are electrodeposited is rotated while engaging with the gear teeth, thereby grinding the engaging surface.

3. The reduction gear according to claim 1 or 2, wherein the worm and the worm wheel constitute a reduction mechanism for an electric power steering apparatus.

4. A reduction gear comprising:
a worm made of metal; and
a worm wheel comprising gear teeth which engage with the worm,
wherein at least the gear teeth of the worm wheel are made of synthetic resin, and an engaging surface of the gear teeth is lubricated by grease,
an arithmetic average roughness Ra of a surface of the worm is 0.1 µm or less, and
the engaging surface of the worm wheel has a plurality of grease reservoir recess portions, which are formed in a scattered manner, over an entire surface.

5. The reduction gear according to claim 4, wherein the grease reservoir recess portions are formed on the engaging surface by a processing method in which the engaging surface is exposed to plasma discharges, thereby forming recesses, and thereafter the engaging surface is pre-operated by the worm.

6. The reduction gear according to claim 4, wherein the grease reservoir recess portions are formed on the engaging surface by a processing method in which recesses are formed on the engaging surface by a blasting process, and thereafter the engaging surface is pre-operated by the worm.

7. The reduction gear according to any one of claims 4 to 6, wherein the worm and the worm wheel constitute a reduction mechanism for an electric power steering apparatus.
